# FASCICULE DE BREVET EUROPEEN

(11) **EP 3 321 202 B1**
(45) Date de publication et mention de la délivrance du brevet: **07.08.2019**
(21) Numéro de dépôt: 17195023.1
(22) Date de dépôt: 05.10.2017
(51) Int. Cl.: B65D 8/00, B65D 77/06

(54) **DISPOSITIF D'EMBALLAGE D'UN RÉCIPIENT SOUPLE, IMITANT UN TONNEAU, ET PROCÉDÉ DE FABRICATION CORRESPONDANT**
VERPACKUNGSVORRICHTUNG FÜR EINEN FLEXIBLEN BEHÄLTER, DIE EINER TONNE GLEICHT, UND ENTSPRECHENDES HERSTELLUNGSVERFAHREN
DEVICE FOR PACKAGING A FLEXIBLE CONTAINER, MIMICKING A BARREL, AND CORRESPONDING MANUFACTURING METHOD

(30) Priorité: 09.11.2016 FR 1660852
(43) Date de publication de la demande: 16.05.2018
(73) Titulaire: ETS Martin, 7940 Auge (FR)
(72) Inventeur: ARNAUD, Alain, 79260 La Crèche (FR); GIRARD, Nicolas, 79400 Azay le Brulé (FR)
(74) Mandataire: Vidon Brevets & Stratégie

(56) Documents cités:
- DE-A1-102013 002 004
- FR-A1- 2 924 971
- GB-A- 1 136 524
- US-A- 1 459 991
- US-A- 3 977 569
- US-A1- 2015 048 082

## Description

### 1. Domaine de l'invention

Le domaine de l'invention est celui de la fabrication d'emballages, et notamment de suremballages décoratifs et/ou ergonomiques, en particulier pour récipients souples destinés notamment à contenir une matière liquide, visqueuse ou pulvérulente, et par exemple un liquide tel que du vin ou des jus de fruits.

### 2. Art antérieur

Les matières liquides, visqueuses ou pulvérulentes doivent être conditionnées dans des récipients hermétiques. Pendant longtemps, on a principalement utilisé des récipients rigides, en particulier des bouteilles ou des récipients similaires.

Plus récemment, des récipients souples, outres ou poches, on été proposés pour conditionner un liquide, tel que du vin. Cette poche, qui peut être autoportante grâce à une base adaptée, et présente un robinet permettant d'extraire le liquide. Ce type de récipient est notamment connu sous les marques déposées « Bag in Box » ou « BIB ».

Le récipient souple est, selon les cas, commercialisé sans suremballage, ou dans une boite parallélépipédique, notamment en carton, pour former une « caisse-outre ». Ce type de produit est également connu sous les marques déposées « Bag in Box » ou « BIB ».

Cette solution permet de conditionner un volume variable de liquide, par exemple de 25 cl à plusieurs litres de vin ou de jus de fruits, et s'avère efficace, en ce qui concerne la conservation du liquide.

Pour autant, les poches sans suremballage autant que les versions présentant un emballage en carton sont peu esthétiques, par exemple pour une installation sur une table ou un buffet, et véhiculent une image peu valorisante pour le contenu.

Il a été envisagé, par le passé, des emballages à base de demi-coques en matière plastique, assemblées par vissage ou emboîtage (US3977569 par exemple). Ces solutions ne sont cependant pas adaptées en pratique, du fait d'un coût de production relativement élevé par rapport à l'utilisation et d'un aspect au final peu qualitatif (matière plastique), par exemple pour contenir du vin ou un liquide similaire. Le matériau pose également des problèmes de recyclage.

Il existe donc un besoin d'une nouvelle présentation pour ce genre de récipient qui présente un aspect nouveau, plus stable et peu coûteuse, et aisément et efficacement recyclable.

### 3. Résumé de l'invention

L'invention concerne ainsi un dispositif d'emballage d'un récipient souple contenant une matière liquide ou visqueuse ou pulvérulente, ledit récipient présentant un conduit de sortie pour l'extraction de ladite matière.

Ledit dispositif d'emballage est formé de deux paniers sensiblement tronconiques assemblés, un panier inférieur et un panier supérieur, lesdits paniers comprenant un fond, une paroi latérale et une surface supérieure définissant une ouverture.

Selon l'invention, chacun de ces paniers est réalisé à l'aide d'un assemblage de douelles s'étendant chacune sur ledit fond et ladite paroi latérale, et lesdits paniers sont assemblés et solidarisés l'un à l'autre par les bords de leurs surfaces supérieures respectives, après que le récipient souple a été placé dans l'un des paniers, de façon à présenter une forme générale de tonneau, Ledit panier inférieur présente une ouverture ou un pré-découpage correspondant, permettant le passage dudit conduit de sortie.

De tels paniers sont connus en eux-mêmes. En revanche, leur assemblage selon l'invention est nouveau et non évident. En effet, ils sont classiquement destinés à être utilisés indépendamment les uns des autres, et à reposer sur leur fond. Ici, le panier supérieur est retourné (le fond se trouvant au-dessus et l'ouverture (aussi appelé partie supérieure par abus de langage, dans cette position retournée) se trouve en dessous.

Le bord de ladite surface supérieure dudit panier peut être défini par au moins un cercle reliant les extrémités desdites douelles. Et les bords de ces deux paniers sont solidarisés, par exemple à l'aide d'un cercle central.

On propose ainsi un nouveau type d'emballage, ou de suremballage, bien adapté aux récipients souples, simple et peu coûteux à fabriquer et à assembler, et offrant un aspect esthétique original et intéressant, imitant un tonneau ou un produit similaire, tout en conservant les avantages du récipient souple (conservation, présence de robinet, accessible via l'ouverture ou le pré-découpage...).

De préférence, pour optimiser cet aspect de tonneau, les deux paniers sont de formes et de dimensions identiques ou quasi-identiques. Cependant, dans certaines variantes, des formes différentes peuvent être envisagées.

Selon un mode de réalisation particulier de l'invention, la solidarisation desdits deux paniers et dudit cercle central est réalisée par collage.

D'autres modes d'assemblage, définitifs, par exemple par couture ou agrafage, ou temporaires, par exemple par clipsage, peuvent également être envisagés.

Selon un mode de réalisation particulier de l'invention, une desdites douelles dudit panier inférieur porte un pré-découpage formant ladite ouverture.

Dans ce cas, ladite douelle prédécoupée peut notamment être en papier, en carton ou en bois.

Selon un mode de réalisation particulier, ladite douelle prédécoupée présente une forme adaptée, présentant une partie circulaire destinée à coïncider sensiblement avec le fond du panier inférieur.

Selon un autre aspect, au moins certaines desdites douelles, ledit au moins un cercle et ledit cercle central sont en bois. Avantageusement, ces éléments sont en bois, et obtenus par exemple à partir de peuplier déroulé.

Ainsi, l'invention propose une solution d'emballage d'un récipient souple qui est écologique et peu coûteuse.

Selon un mode de réalisation particulier, le dispositif d'emballage comprend un élément sensiblement cylindrique intérieur, permettant le guidage et/ou le maintien dudit récipient souple.

Cet élément cylindrique permet d'une part de faciliter la mise en place du récipient souple, et d'autre part de le protéger, en limitant les risques de détérioration par contact direct contre les douelles.

Il peut par exemple être est formé d'une feuille cartonnée roulée en cylindre.

Par ailleurs, des moyens de suremballage entourant l'ensemble formé des deux paniers assemblés peuvent être prévus.

Notamment, ces moyens de suremballage peuvent comprendre un élément cartonné découpé de façon que deux de ses extrémités se solidarisent et que ledit ensemble formé des deux paniers assemblés ne puisse être séparé desdits moyens de suremballage sans détérioration de ces derniers.

Selon un mode de réalisation particulier, le dispositif comprend une poignée de transport, qui peut par exemple être formée dans le suremballage, solidarisée à ce dernier et/ou à l'un et/ou l'autre des paniers.

L'invention concerne également un procédé de fabrication d'un tel emballage, comprenant notamment les étapes suivantes :
- fabrication de deux paniers, un panier inférieur et un panier supérieur tronconiques, comprenant les sous-étapes de :
   ∘ obtention de douelles ;
   ∘ assemblage d'un ensemble desdites douelles en étoile ;
   ∘ emboutissage desdites douelles assemblées en étoile, pour former le fond et la paroi latérale de chacun desdits paniers ;
- pré-découpage ou découpage d'une ouverture dans l'une des douelles dudit panier inférieur ;
- mise en place d'un récipient souple dans ledit panier inférieur ;
- mise en place dudit panier supérieur sur ledit panier inférieur, lesdites surfaces supérieures étant placées l'une sur l'autre ;
- solidarisation desdits paniers par les bords de leurs surfaces supérieures respectives.

Selon les variantes, un tel procédé peut comprendre au moins une des étapes
appartenant au groupe comprenant :
- fourniture d'une douelle en papier ou en carton portant une ouverture ou un pré-découpage correspondant, pour le passage du conduit de sortie dudit récipient souple ;
- insertion d'un élément sensiblement cylindrique intérieur, destiné à faciliter le guidage et/ou le maintien dudit récipient souple ;
- mise en place, par exemple collage, d'un cercle central pour solidariser les deux paniers ;
- mise en place de moyens de suremballage entourant l'ensemble formé des deux paniers assemblés.

### 4. Liste des figures

D'autres caractéristiques et avantages de l'invention ressortiront à la lecture de la description détaillée qui suit, en référence aux figures annexées, parmi lesquelles :
- la figure 1 est une vue en perspective illustrant les deux paniers constituant le dispositif d'emballage de l'invention ;
- la figure 2 représente le dispositif d'emballage de l'invention après assemblage des deux paniers de la figure 1 ;
- la figure 3 représente le dispositif d'emballage de l'invention après solidarisation des deux paniers de la figure 1 ;
- la figure 4 illustre une variante de panier, à section hexagonale ;
- la figure 5 est une vue présentée à plat d'un mode de réalisation particulier d'une douelle présentant l'ouverture de sortie d'un robinet ;
- la figure 6 est une vue présentée à plat d'un élément cartonné destinée à être placé à l'intérieur du panier inférieur ;
- la figure 7 est une vue présentée à plat de moyens de suremballage ;
- les figures 8A et 8B illustrent deux exemples d'emballage selon l'invention, équipés d'un suremballage cartonné ;
- la figure 9 est un organigramme simplifié illustrant un mode de réalisation du procédé de fabrication et d'assemblage selon l'invention.

### 5. Description de l'invention

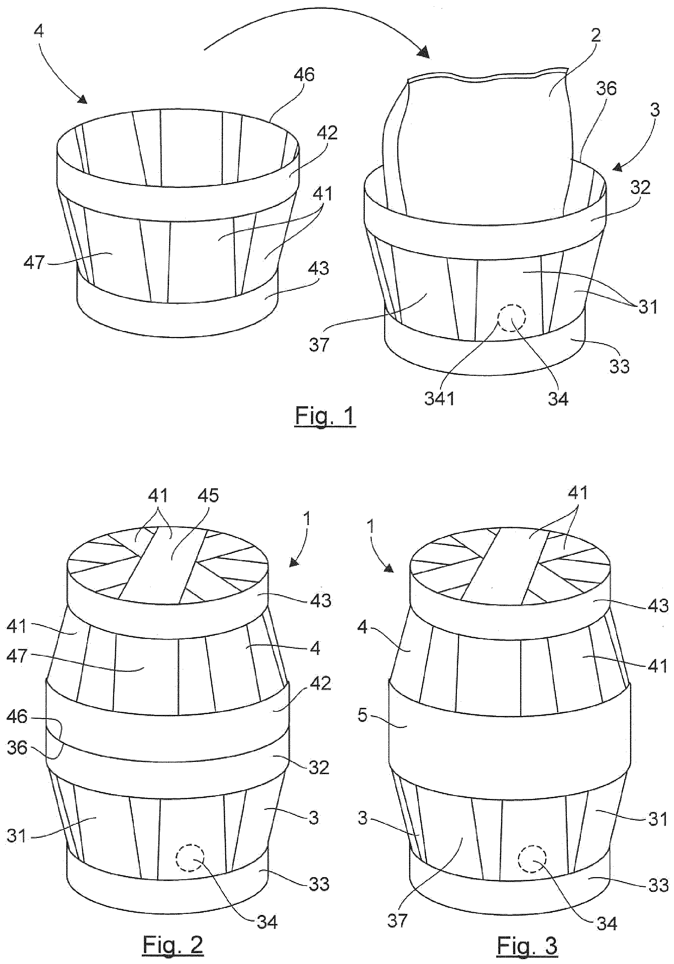

La figure 3 illustre le dispositif d'emballage 1 de l'invention assemblé, dans lequel est stocké un récipient souple 2 destiné à contenir une matière liquide, visqueuse ou pulvérulente.

Dans cet exemple, la matière contenue dans le récipient souple 2 est un liquide, et plus particulièrement du vin ou du jus de fruits. Bien sûr, d'autres liquides, alimentaires ou non, peuvent être également contenus dans un tel récipient souple, ainsi que des produits visqueux (savon par exemple) ou pulvérulent (farine par exemple). L'invention peut s'appliquer notamment au vin, du fait que le dispositif à l'aspect général d'un tonneau.

Comme illustré sur la figure 1, le dispositif d'emballage 1 est constitué de deux paniers de forme générale tronconique, un panier inférieur 3 et un panier supérieur 4. Les paniers inférieur 3 et supérieur 4 sont, dans cet exemple, sensiblement identiques.

On ne décrit ci-après que le panier inférieur 3. On comprend bien évidemment que le panier supérieur 4 présente une structure similaire et qu'il est fabriqué de la même manière (à l'exception le cas échéant de l'insertion d'une douelle particulière, possiblement dans une autre matière, pour ménager ou prévoir une ouverture de passage du robinet, dans le panier inférieur, comme décrit par la suite).

Ainsi, le panier inférieur 3 est constitué d'une pluralité de douelles, ou lamelles, 31 assemblées, et maintenues par un cercle supérieur 32 et un cercle inférieur 33. Dans cet exemple, les douelles 31 et les cercles 32, 33 sont fabriqués en bois.

Les paniers sont par exemple fabriqués en bois de peuplier déroulé : les grumes sont d'abord déroulées et coupées en lamelles fines (par exemple de 0,8 à 1,5 mm) qui deviendront les éléments constitutifs du dispositif d'emballage de l'invention, douelles et cercles, découpés aux dimensions requises.

En option le bois peut être teinté ou coloré, notamment au moyen de teintures alimentaires. Un marquage peut également être appliqué.

Ces éléments peuvent d'abord être pré-séchés, pour atteindre un taux d'humidité compatible pour l'application d'une colle à chaud (« hot melt » en anglais).

Pour obtenir un panier 3, les douelles 31 sont disposées à plat, en étoile, (manuellement ou au moyen de distributeur automatique) avant d'être embouties entre une matrice et un poinçon afin de donner aux douelles 31 la forme d'un panier. Après emboutissage, les cercles supérieur 32 et inférieur 33 sont encollés et amenés en contact avec les douelles 31. Les cercles 32, 33 et les douelles 31 sont maintenus en contact jusqu'à bonne prise de la colle afin d'assurer la tenue du panier 3. D'autres moyens de solidarisation sont bien sûr possibles.

Après assemblage des douelles 31 et des cercles 32, 33, le panier inférieur 3 présente donc un fond 35 (non visible) et un bord supérieur 36 qui défini la surface supérieure ouverte, ou ouverture, du panier 3. Le fond 35 et le bord supérieur 36 sont reliés par une paroi périphérique 37.

De la même façon, le panier 4 est constitué de douelles 41, d'un cercle supérieur 42 et d'un cercle inférieur 43 qui sont maintenus ensemble selon le même procédé. Le panier supérieur 4 présente donc également un fond 45, un bord 46 et une paroi périphérique 47.

Par ailleurs, le panier inférieur 3 présente une ouverture 34, qui permet le passage d'un conduit de sortie (non illustré), classiquement équipé d'un robinet, disposé sur le récipient 2 de façon à permettre l'extraction du liquide du récipient souple.

L'ouverture 34 est ménagée dans une des douelles 31 formant le panier inférieur 3. Plus précisément, l'ouverture 34 peut se présenter sous la forme d'un pré-découpage 341 qui fragilise la douelle 31 et qui peut être rompu par l'utilisateur de façon à faire passer le conduit de sortie du récipient 2 par l'ouverture 34.

Dans une variante, l'ouverture 34 est formée par une découpe de la douelle 31 et il suffit donc simplement à l'utilisateur de faire passer le conduit de sortie du récipient 2 par cette ouverture 34.

Dans cet exemple, l'ouverture 34 est ménagée dans la paroi périphérique 37 du panier inférieur 3. Dans une variante (ou en complément), l'ouverture 34 peut être ménagée dans le fond 35 du panier inférieur 3.

L'ouverture 34 ménagée dans une des douelles 31 du panier inférieur 3 peut être effectuée préalablement à la disposition des douelles 31 en étoile avant l'emboutissage.

Avant solidarisation du panier supérieur 4 et du panier inférieur 3 avec son ouverture 34, il est nécessaire de placer le récipient souple 2 à l'intérieur du panier inférieur 3, comme illustré sur la figure 1.

Les paniers inférieur 3 et supérieur 4 sont ensuite assemblés et solidarisés pour former le dispositif d'emballage 1 de l'invention. Pour ce faire, le panier supérieur 4 est mis en place sur le panier inférieur 3, comme illustré sur la figure 2. En d'autres termes, le bord 46 du panier supérieur 4 est amené en contact sur le bord 36 du panier inférieur 3.

Comme illustré sur la figure 3, un cercle central 5 est placé et fixé, par exemple par collage, sur les cercles supérieurs 32, 42 des paniers inférieur 3 et supérieur 4 respectivement, de façon à solidariser les deux paniers 3, 4 entre eux et obtenir le dispositif d'emballage 1.

Pour ce faire, le cercle central 5 est encollé puis amené en contact avec les deux cercles supérieurs 32, 42 des paniers 3, 4 respectifs. Le cercle central 5 et les cercles supérieurs 32, 42 sont maintenus en contact jusqu'à bonne prise de la colle.

Dans une version simplifiée, les bords des paniers, exempts de cercles supérieurs 32, 42, peuvent être solidarisés directement par un tel cercle central 5.

Le dispositif d'emballage 1 de l'invention permet donc de recevoir, de façon esthétique et originale, en adoptant l'aspect d'un tonneau, un récipient souple 2 contenant, par exemple, du vin. Le dispositif d'emballage 1 est simple à mettre en oeuvre et présente un faible coût de fabrication.

Une telle structure permet en outre d'assurer une excellente stabilité du dispositif d'emballage 1 lorsqu'il est dressé sur une table ou un buffet.

En outre, le dispositif d'emballage 1 permet de protéger le récipient souple 2 lors du transport et de la manutention afin d'empêcher que ce dernier ne soit perforé.

### 6. Autres aspects et variantes

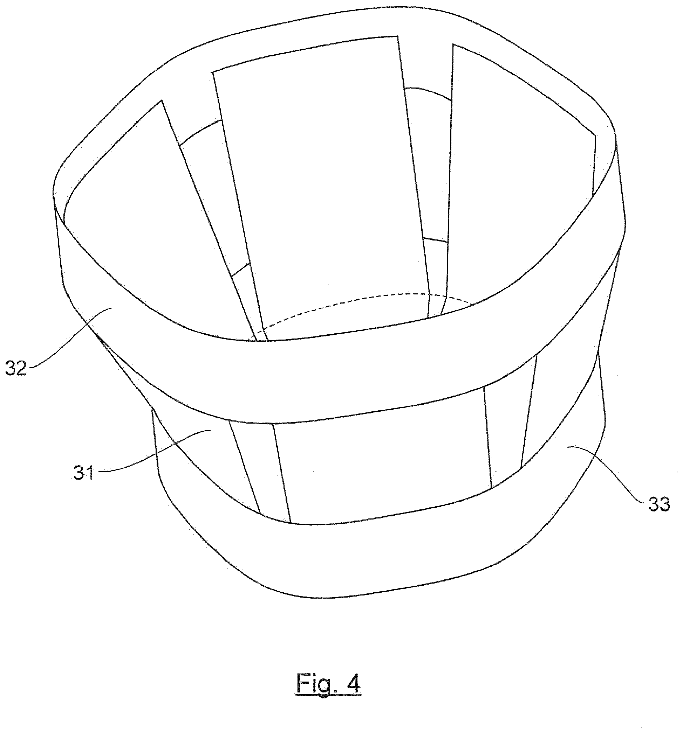

La forme générale de ces paniers des figures 1 à 3 est essentiellement un tronc de cône de révolution, le diamètre du fond 35 étant inférieur au diamètre de l'ouverture définie par le bord 36. Des formes sensiblement différentes peuvent être envisagées pour le tronc de cône, la courbe directrice pouvant former sensiblement un hexagone, comme illustré par la figure 4, ou un polygone à plus de 6 côtés (il est souhaitable que le nombre de côtés soit au moins 6, pour que le cercle central 5 suive efficacement et sans casser les bords supérieurs des paniers 3 et 4). Une courbe directrice ovale peut également être envisagée. La forme générale des paniers est obtenue par l'opération d'emboutissage, et donc induite par la forme de la matrice et du poinçon.

Dans l'exemple décrit ci-dessus, le dispositif d'emballage de l'invention est destiné au transport et à la protection d'un récipient souple se présentant sous la forme d'une poche souple contenant du vin.

Toutefois, le dispositif d'emballage 1 de l'invention peut également être utilisé pour le transport et la protection d'un récipient souple 2 pouvant contenir d'autres matières/produits, comme par exemple : du lait, du jus de fruits, du sirop d'érable, de l'huile, du vinaigre, du miel, de la lessive, du savon liquide, etc.

Le dispositif d'emballage 1 peut aussi être prévu pour des récipients souples 2 contenant des denrées alimentaires telles que de la farine, du sucre, du sel, des pâtes, etc.

Le volume du récipient souple peut être variable, de quelques dizaines de centilitres à quelques dizaines de litres, selon les matières contenues et les applications, les paniers assemblés pouvant selon les cas s'apparenter à un tonnelet, un tonneau, un fût, une barrique, un baril...

Dans un mode de réalisation particulier, une portion intermédiaire essentiellement cylindrique peut être placée entre les deux paniers. Dans ce cas, deux cercles de solidarisation peuvent être prévus, un premier solidarisant le bord définissant l'ouverture du panier inférieur au bord inférieur de la portion intermédiaire et un second reliant le bord supérieur de la portion intermédiaire au bord définissant l'ouverture du panier supérieur.

Il peut être envisagé de nombreuses variantes de matériaux pour la fabrication des cercles et des douelles. En effet, le dispositif de l'invention peut être fabriqué dans un matériau, ou une combinaison de matériaux parmi le bois, le carton, le papier, le composite ou le plastique, notamment.

Dans le mode de réalisation décrit, la douelle 31 du panier inférieur 3 portant l'ouverture 34 est par exemple fabriquée en carton ou en papier, afin de faciliter la mise en oeuvre de la découpe ou de la prédécoupe 341, et les autres douelles sont en bois. Il est également possible que la douelle 31 soit également en bois.

Dans une version simple, cette douelle 34 peut être de forme essentiellement rectangulaire, et sensiblement de la même dimension que les autres douelles en bois.

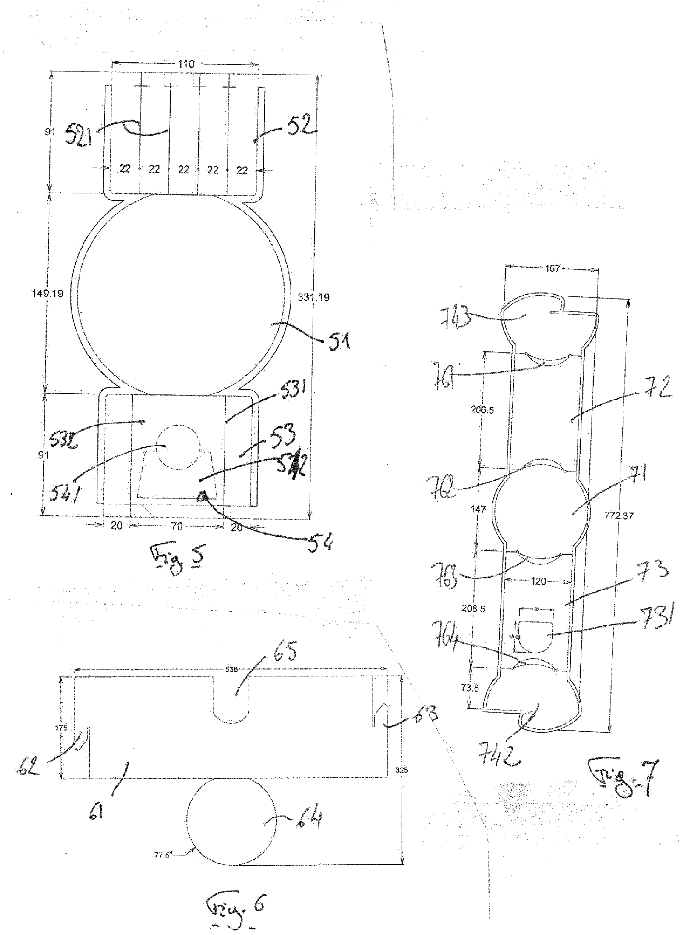

Dans une variante, illustrée par la figure 5, la douelle présente une forme particulière, aisée à obtenir dès lors qu'elle est en papier ou en carton. Elle comprend une portion centrale 51 en forme de disque, dont le diamètre correspond sensiblement à celui du fond du panier, et deux portions d'extrémité 52 et 53, destinées à s'étendre le long de la paroi latérale du panier, après emboutissage.

Des dimensions, en millimètres, sont mentionnées à titre indicatif sur la figure 5, pour un mode de réalisation particulier.

On note que les deux parties d'extrémité 52 et 53 sont relativement larges, par rapport aux autres douelles, pour offrir une solidité suffisante. Des plis ou des pré-découpages 521, 531 sont prévus, pour que ces parties 52, 53 prennent une forme incurvée et suivent la forme générale tronconique ou sensiblement tronconique du panier. Ainsi, la partie 52 comprend cinq portions qui vont se plier les unes par rapport aux autres, et la partie 53 comprend trois portions, dont une portion centrale 532 comprenant l'ouverture prédécoupée 54, que l'utilisateur peut retirer pour accéder au robinet, en ôtant tout d'abord la partie circulaire 541, puis en rabattant vers le bas le volet 542.

Le disque central 51 permet d'offrir, pour le récipient souple, une surface de contact sans aspérité ni élément pouvant, le cas échéant, le détériorer ou le percer.

Le cas échéant, d'autres douelles en papier ou carton peuvent être insérées parmi des douelles en bois, y compris pour le panier supérieur, par exemple pour produire un effet visuel particulier, assurer une continuité visuelle entre les deux paniers, fournir une surface apte à porter des illustrations et/ou des informations,...

Une impression directe sur les douelles et/ou la mise en place d'étiquettes ajoutées sont possible. L'ajout d'une douelle papier ou carton dans le panier supérieur, par exemple, permet d'offrir des possibilités importantes de personnalisation, avec une grande surface de communication, notamment pour des mentions de type commercial ou marketing, de conditions d'utilisation, de mentions légales (degré d'alcool, date limite de consommation,...), etc.

La solidarisation des cercles supérieur et inférieur avec les douelles est dans cet exemple réalisée par collage. Il est possible, dans une variante, de réaliser cette solidarisation par d'autres moyens, par le biais d'agrafes ou de coutures par exemple.

De plus, la solidarisation du cercle central 5 avec les cercles supérieurs 32, 42 des deux paniers 3, 4 respectifs est ici également réalisée par collage. Il peut être envisagé de réaliser cette solidarisation par la mise en oeuvre de clips de maintien, d'agrafes ou bien de points de couture. Certains types de solidarisation peuvent notamment permettent la réutilisation du dispositif.

Dans l'exemple illustré sur la figure 2, les bords 36, 46 des paniers 3, 4 sont simplement amenés en vis-à-vis afin de permettre la solidarisation par le biais du cercle central 5.

Afin de faciliter encore l'étape d'assemblage des paniers inférieur 3 et supérieur 4, il peut être prévu des formes complémentaires sur les bords 36, 46 de chacun des paniers afin de permettre un emboitement du panier supérieur 4 avec le panier inférieur 3.

Dans une variante de l'invention, chacun des paniers 3, 4 peuvent ne présenter qu'un cercle supérieur 32, 42. Toutefois, bien que la mise en oeuvre d'un cercle inférieur 33, 43 ne soit pas obligatoire, elle est préférable afin d'améliorer la robustesse du dispositif d'emballage 1, et pour conserver la ressemblance générale avec un tonneau.

Le dispositif d'emballage 1 peut être livré totalement monté avec le récipient souple 2 préalablement mis en place à l'intérieur. Le dispositif d'emballage 1 peut aussi être livré démonté, c'est-à-dire que les deux paniers 3, 4 ne sont pas solidarisés, afin que l'utilisateur, par exemple le fournisseur du récipient souple 2, puisse mettre en place lui-même le récipient souple 2 dans le panier inférieur 3 et qu'il solidarise ensuite les paniers inférieur 3 et supérieur 4 entre eux.

Le dispositif d'emballage 1 de l'invention peut être démontable et réutilisable de sorte qu'un utilisateur puisse échanger le récipient souple 2, lorsque ce dernier est vide, avec un autre récipient souple 2 plein. Si le récipient souple 2 le permet, il peut le remplir de nouveau et refermer le dispositif d'emballage 1 afin de multiplier le nombre d'utilisation du dispositif d'emballage 1.

Par ailleurs, les matériaux utilisés pour fabriquer le dispositif de l'emballage 1, notamment le bois et le carton, peuvent permettre de recycler efficacement le dispositif d'emballage 1 en fin de vie. Le dispositif d'emballage 1 de l'invention est ainsi respectueux de l'environnement.

Les paniers 3, 4 et le cercle central 5 constituant le dispositif d'emballage 1 peuvent être colorés au moyen d'une teinture alimentaire, par exemple. Ils peuvent, en outre, présenter un marquage incluant, par exemple un visuel, une marque, des données concernant le produit conditionné, des conseils d'utilisations, des données légales, etc.

Par ailleurs, le panier inférieur 3 peut présenter des pieds ou un support additionnel (non représentés), le cas échéant amovibles, afin d'améliorer encore la stabilité du dispositif d'emballage 1.

Un cylindre intérieur peut être placé à l'intérieur du dispositif, pour faciliter le guidage du récipient souple et/ou le protéger des éventuels aspérités ou défauts susceptibles de le détériorer.

La figure 6 illustre un exemple d'un tel cylindre, réalisé à partir d'une feuille en papier ou en carton prédécoupé. Les dimensions, en millimètres, sont données à titre indicatif pour un mode de réalisation particulier. Il comprend une partie principale 61, formant le cylindre, une fois que la feuille est roulée, et que ces deux extrémités 62 et 63 sont insérées l'une dans l'autre.

Une découpe 65 est ménagée, pour le passage du robinet.

Un disque supérieur 64 peut être prévu, pour s'étendre au niveau du fond du panier supérieur. Ainsi, dans une version en combinaison avec la douelle de la figure 5, le récipient souple est intégralement protégé par des éléments en papier ou en carton.

Par ailleurs, un suremballage supplémentaire peut être prévu, pour assurer le maintien de façon scellée des deux paniers, faciliter le transport du dispositif ainsi formé et/ou recevoir des informations ou un marquage adapté.

La figure 7 illustre, à plat, un exemple d'un tel suremballage, pouvant être réalisé en carton. Il comprend une partie centrale 71 sensiblement circulaire, qui viendra prendre position sous la partie inférieure du tonneau.

Deux bandes latérales 72 et 73 sont prévues, pour s'étendre le long des parois latérales du tonneau, l'une d'entre elles présentant une ouverture 731 pour le passage du robinet. Enfin, les deux extrémités portent des parties en demi-cercle complémentaires 741 et 742, présentant des moyens d'assemblage l'un avec l'autre, destinés à être solidarisés sur le dessus du tonneau (la position du fond et du dessus du tonneau peuvent bien sûr être inversés).

Cette solidarisation peut être assurée par un collage, ou par tout autre moyen. Dans une mise en oeuvre particulière, l'assemblage est fait de façon qu'il ne puisse pas être désassemblé sans destruction, pour garantir que le contenu n'a pas été modifié.

Pour la même raison, des découpes 761, 762, 763 et 764 peuvent être prévues, pour recevoir des portions des bords des fonds des deux paniers, de façon à empêcher le retrait du suremballage par coulissement sur le côté, une fois que celui-ci a été assemblé.

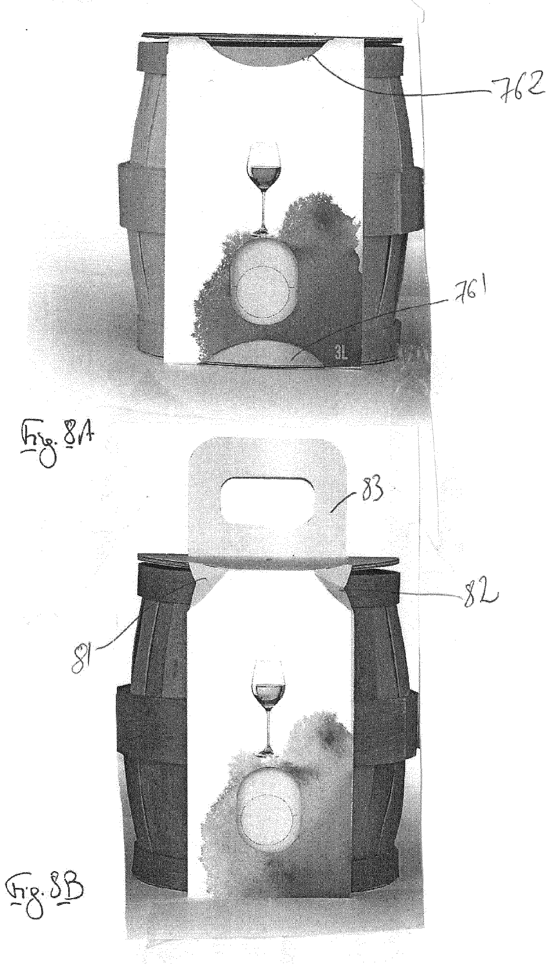

La Figure 8A illustre un exemple de récipient équipé du suremballage de la figure 7.

La Figure 8B illustre une autre variante, dans laquelle les moyens anti-retrait ne sont pas des découpes, mais des plis adaptés 81 et 82.

Dans cette variante, on note également la présence d'une poignée 83, qui a été formée dans le prolongement de l'élément cartonné formant le suremballage. D'autres types de poignée peuvent bien sûr être envisagées, de formes différentes, ou rapportées sur le suremballage ou sur le tonneau lui-même.

De même, d'autres formes de suremballage peuvent être envisagées, par exemple avec des formes verticales non rectangulaires, moins larges, présentant des ouvertures et/ou des renforts, ...

### 7. Procédé de fabrication

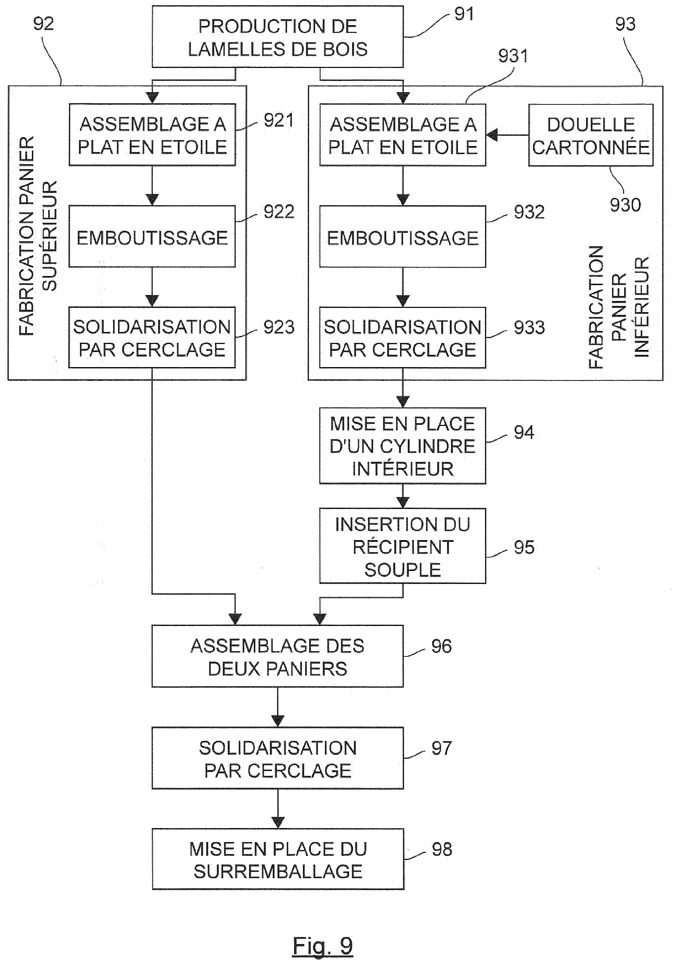

La figure 9 illustre un exemple de procédé de fabrication d'un dispositif d'emballage, également appelé dans la description tonneau, selon l'invention.

On obtient tout d'abord des lamelles de bois (91), par exemple à partir de bois de peuplier déroulé. Celles-ci permettent de fabriquer un panier supérieur (92) et un panier inférieur (93).

Pour ceci, des lamelles, prédécoupées aux dimensions souhaitées (la longueur correspondant à deux fois la hauteur du panier et au diamètre du fond de celui-ci) sont placées à plat en étoile (921 et 922), puis sont embouties (922 et 932) de façon à redresser les extrémités des lamelles, formant douelle, par rapport à la partie centrale. Cette partie centrale forme le fond du panier, et les extrémités, les bords de la paroi latérale. On comprend ainsi que chaque lamelle, ou douelle, s'étend de façon continue d'un bord du panier à l'autre, formant successivement un premier élément de paroi, le fond, et un second élément de paroi latéral, sensiblement symétrique au premier.

Bien sûr, pour permettre cet emboutissage, les douelles sont maintenues à un degré d'humidité adéquat, permettant leur déformation, tout en permettant également un collage, notamment des cercles faisant faire le tour de la partie supérieure et de la partie inférieure du panier (923 et 933).

D'autres modes de fixation que le collage peuvent être envisagés, notamment l'agrafage, en particulier si une protection intérieure est prévue, entre les douelles et le cercle, d'une part, et le récipient souple, d'autre part.

Dans le cas du panier inférieur, on prévoit avantageusement l'utilisation d'une douelle cartonnée (930) présentant une ouverture prédécoupée, et ayant par exemple la forme générale illustrée par la Figure 5. D'autres approches peuvent être envisagées, tant en ce qui concerne le matériau utilisé que le moment où est réalisé le prédécoupage (celui-ci pourrait ainsi, dans certains modes de réalisation, être réalisé après fabrication du panier inférieur, voire assemblage des deux paniers).

Une fois les paniers fabriqués, on peut placer dans le panier inférieur un cylindre de protection (94), par exemple du type illustré sur la Figure 6. Ensuite, le récipient souple est placé dans le panier inférieur (95), ici guidé par le cylindre intérieur. On contrôle que le robinet de ce récipient souple est bien placé en face de l'ouverture prévue sur la douelle cartonnée. La découpe prévue dans le cylindre peut permettre de faciliter cette mise en place.

Puis, on ramène le panier supérieur sur le panier inférieur (96), pour former un ensemble ayant l'apparence d'un tonneau, et on solidarise (97) ces deux paniers, par exemple à l'aide d'un cerclage en bois rapporté et collé.

Enfin, un suremballage supplémentaire en carton peut être rapporté (98), formant support de communication et/ou système de garantie de non ouverture. On peut également prévoir de rapporter une poignée de transport, soit intégrée au suremballage cartonné, soit solidarisée ensuite à celui-ci ou à l'un des paniers.

## Revendications

1. Dispositif d'emballage (1) d'un récipient souple (2) contenant une matière liquide ou visqueuse ou pulvérulente, ledit récipient (2) présentant un conduit de sortie pour l'extraction de ladite matière,
ledit dispositif d'emballage (1) étant formé de deux paniers (3, 4) sensiblement tronconiques assemblés, un panier inférieur (3) et un panier supérieur (4), lesdits paniers comprenant un fond, une paroi latérale et une surface supérieure définissant une ouverture,
**caractérisé en ce que** chacun desdits paniers est réalisé à l'aide d'un assemblage de douelles (31, 41) s'étendant chacune sur ledit fond (35, 45) et ladite paroi latérale (37, 47),
**en ce que** lesdits paniers (3, 4) sont assemblés et solidarisés l'un à l'autre par les bords (36, 46) de leurs surfaces supérieures respectives, après que ledit récipient souple (2) a été placé dans l'un des paniers (3, 4), de façon à présenter une forme générale de tonneau,
et **en ce que** ledit panier inférieur (3) présente une ouverture (34) ou un pré-découpage correspondant, permettant le passage dudit conduit de sortie.

2. Dispositif d'emballage (1) selon la revendication 1, **caractérisé en ce qu'**il comprend un cercle central (5) solidarisant les deux paniers (3, 4).

3. Dispositif d'emballage (1) selon la revendication 2, **caractérisé en ce que** la solidarisation desdits deux paniers (3, 4) et dudit cercle central (5) est réalisée par collage.

4. Dispositif d'emballage (1) selon l'une des revendications 1 à 3, **caractérisé en ce qu'**une desdites douelles (31) dudit panier inférieur (3) porte un pré-découpage (341) formant ladite ouverture (34).

5. Dispositif d'emballage (1) selon la revendication 4, **caractérisé en ce que** ladite douelle (31) prédécoupée est en papier, en carton ou en bois.

6. Dispositif d'emballage (1) selon l'une quelconque des revendications 4 et 5, **caractérisé en ce que** ladite douelle (31) présente une forme adaptée, présentant une partie circulaire (51) destinée à coïncider sensiblement avec le fond du panier inférieur.

7. Dispositif d'emballage (1) selon l'une des revendications 1 à 6, **caractérisé en ce qu'**au moins certaines desdites douelles (31, 41), ledit au moins un cercle (32, 33, 42, 43) et ledit cercle central (5) sont en bois.

8. Dispositif d'emballage (1) selon la revendication 7, **caractérisé en ce que** lesdites douelles et lesdits cercles sont réalisés en bois de peuplier déroulé.

9. Dispositif d'emballage (1) selon l'une quelconque des revendications 1 à 8, **caractérisé en ce qu'**il comprend un élément sensiblement cylindrique intérieur, permettant le guidage et/ou le maintien dudit récipient souple.

10. Dispositif d'emballage (1) selon la revendication 9, **caractérisé en ce que** ledit élément sensiblement cylindrique est formé d'une feuille cartonnée roulée en cylindre.

11. Dispositif d'emballage (1) selon l'une quelconque des revendications 1 à 10, **caractérisé en ce qu'**il comprend des moyens de suremballage entourant l'ensemble formé des deux paniers assemblés.

12. Dispositif d'emballage (1) selon la revendication 11, **caractérisé en ce que** lesdits moyens de suremballage comprennent un élément cartonné découpé de façon que deux de ses extrémités se solidarisent et que ledit ensemble formé des deux paniers assemblés ne puisse être séparé desdits moyens de suremballage sans détérioration de ces derniers.

13. Dispositif d'emballage (1) selon l'une quelconque des revendications 1 à 12, **caractérisé en ce qu'**il comprend une poignée de transport.

14. Procédé de fabrication d'un emballage (1) selon l'une quelconque des revendications 1 à 13, **caractérisé en ce qu'**il comprend les étapes suivantes :
- fabrication de deux paniers (3, 4), un panier inférieur (3) et un panier supérieur (4) tronconiques, comprenant les sous-étapes de :
∘ obtention de douelles (31, 41) ;
∘ assemblage d'un ensemble desdites douelles en étoile ;
∘ emboutissage desdites douelles assemblées en étoile, pour former le fond et la paroi latérale de chacun desdits paniers ;
- pré-découpage ou découpage d'une ouverture (34) dans l'une des douelles dudit panier inférieur (3) ;
- mise en place d'un récipient souple (2) dans ledit panier inférieur (3) ;
- mise en place dudit panier supérieur (4) sur ledit panier inférieur (3), lesdites surfaces supérieures étant placées l'une sur l'autre ;
- solidarisation desdits paniers (3, 4) par les bords (36, 46) de leurs surfaces supérieures respectives.

15. Procédé de fabrication selon la revendication 14, **caractérisé en ce qu'**il comprend au moins une des étapes appartenant au groupe comprenant :
- fourniture d'une douelle en papier ou en carton portant une ouverture (34) ou un pré-découpage correspondant, pour le passage du conduit de sortie dudit récipient souple ;
- insertion d'un élément sensiblement cylindrique intérieur, destiné à faciliter le guidage et/ou le maintien dudit récipient souple ;
- mise en place, par exemple collage d'un cercle central (5) pour solidariser les deux paniers (3, 4) ;
- mise en place de moyens de suremballage entourant l'ensemble formé des deux paniers assemblés.

## Patentansprüche

1. Verpackungsvorrichtung (1) für einen nachgiebigen Behälter (2), der ein flüssiges oder viskoses oder pulverförmiges Material enthält, wobei der Behälter (2) eine Ausgangsleitung zur Extraktion des Materials aufweist,
wobei die Verpackungsvorrichtung (1) aus zwei zusammengefügten im Wesentlichen kegelstumpfförmigen Körben (3, 4) gebildet ist, einem unteren Korb (3) und einem oberen Korb (4), wobei die Körbe einen Boden, eine Seitenwand und eine obere Fläche, die eine Öffnung definiert, umfassen,
**dadurch gekennzeichnet, dass** jeder der Körbe mit Hilfe einer Anordnung von Dauben (31, 41) gebildet ist, die sich jeweils auf dem Boden (35, 45) und der Seitenwand (37, 47) erstrecken,
dadurch, dass die Körbe (3, 4) miteinander durch Ränder (36, 46) ihrer jeweiligen oberen Flächen zusammengefügt und fest verbunden sind, nachdem der nachgiebige Behälter (2) in einen der Körbe (3, 4) platziert wurde, um eine allgemeine Form eines Fasses aufzuweisen,
und dadurch, dass der untere Korb (3) eine Öffnung (34) oder eine Perforation aufweist, die den Durchgang der Abgabeleitung ermöglicht.

2. Verpackungsvorrichtung (1) nach Anspruch 1, **dadurch gekennzeichnet, dass** diese einen zentralen Kreis (5) umfasst, der die beiden Körbe (3, 4) fest verbindet.

3. Verpackungsvorrichtung (1) nach Anspruch 2, **dadurch gekennzeichnet, dass** die feste Verbindung der beiden Körbe (3, 4) und des zentralen Kreises (5) durch Kleben realisiert ist.

4. Verpackungsvorrichtung (1) nach einem der Ansprüche 1 bis 3, **dadurch gekennzeichnet, dass** eine der Dauben (31) des unteren Korbs (3) eine Trennvorbereitung (341) trägt, welche die Öffnung (34) bildet.

5. Verpackungsvorrichtung (1) nach Anspruch 4, **dadurch gekennzeichnet, dass** die der Trennvorbereitung versehene Daube (31) aus Papier, aus Karton oder aus Holz ist.

6. Verpackungsvorrichtung (1) nach einem der Ansprüche 4 und 5, **dadurch gekennzeichnet, dass** die Daube (31) eine angepasste Form aufweist, die einen kreisförmigen Abschnitt (51) aufweist, der dazu bestimmt ist, im Wesentlichen mit dem Boden des unteren Korbs zusammenzufallen.

7. Verpackungsvorrichtung (1) nach einem der Ansprüche 1 bis 6, **dadurch gekennzeichnet, dass** mindestens bestimmte der Dauben (31, 41), der mindestens eine Kreis (32, 33, 42, 43) und der zentrale Kreis (5) aus Holz sind.

8. Verpackungsvorrichtung (1) nach Anspruch 7, **dadurch gekennzeichnet, dass** die Dauben und die Kreise aus ausgerolltem Pappelholz realisiert sind.

9. Verpackungsvorrichtung (1) nach einem der Ansprüche 1 bis 8, **dadurch gekennzeichnet, dass** diese ein inneres im Wesentlichen zylindrisches Element umfasst, das die Führung und/oder das Halten des nachgiebigen Behälters ermöglicht.

10. Verpackungsvorrichtung (1) nach Anspruch 9, **dadurch gekennzeichnet, dass** das im Wesentlichen zylindrische Element aus einem Kartonbogen gebildet ist, der zu einem Zylinder gerollt ist.

11. Verpackungsvorrichtung (1) nach einem der Ansprüche 1 bis 10, **dadurch gekennzeichnet, dass** diese Umverpackungsmittel umfasst, welche die aus den beiden zusammengefügten Körben gebildete Anordnung umgibt.

12. Verpackungsvorrichtung (1) nach Anspruch 11, **dadurch gekennzeichnet, dass** die Umverpackungsmittel ein abgetrenntes Kartonelement aufweisen, so dass zwei seiner Enden fest verbunden werden, und so dass die aus den beiden zusammengefügten Körben durch die Umverpackungsmittel ohne Beeinträchtigung dieser Letzteren nicht getrennt werden kann.

13. Verpackungsvorrichtung (1) nach einem der Ansprüche 1 bis 12, **dadurch gekennzeichnet, dass** diese einen Transportgriff umfasst.

14. Verfahren zur Herstellung einer Verpackung (1) nach einem der Ansprüche 1 bis 13, **dadurch gekennzeichnet, dass** dieses die folgenden Schritte umfasst:
- Herstellung von zwei kegelstumpfförmigen Körben (3, 4), eines unteren Korbs (3) und eines oberen Korbs (4), umfassend die Teilschritte:
∘ Erhalten von Dauben (31, 41);
∘ sternförmiges Zusammenfügen einer Anordnung der Dauben;
∘ Pressen der sternförmig zusammengefügten Dauben, um den Boden und die Seitenwand jedes der Körbe zu bilden;
- Vorbereiten zum Trennen oder Trennen einer Öffnung (34) in einer der Dauben des unteren Korbs (3);
- Platzieren eines nachgiebigen Behälters (2) in dem unteren Korb (3);
- Platzieren des oberen Korbs (4) auf den unteren Korb (3), wobei die oberen Flächen aufeinander gesetzt werden;
- festes Verbinden der Körbe (3, 4) mittels die Ränder (36, 46) ihrer jeweiligen oberen Flächen.

15. Herstellungsverfahren nach Anspruch 14, **dadurch gekennzeichnet, dass** dieses mindestens einen der Schritte umfasst, die zur Gruppe gehören umfassend:
- Bereitstellen einer Daube aus Papier oder aus Karton, die eine Öffnung (34) oder eine entsprechende Trenn-Vorbereitung für den Durchgang der Ausgangsleitung des nachgiebigen Behälters trägt;
- Einfügen eines inneren im Wesentlichen zylindrischen Elements, das dazu bestimmt ist, die Führung und/oder das Halten des nachgiebigen Behälters zu erleichtern;
- Platzieren, zum Beispiel mittels Kleben, eines zentralen Kreises (5), um die beiden Körbe (3, 4) fest zu verbinden;
- Platzieren von Überverpackungsmitteln, welche die gebildete Gesamtheit der beiden zusammengefügten Körbe umgeben.

## Claims

1. Packaging device (1) for a flexible container (2) containing a liquid, viscous or powdery material, said container (2) having an outlet pipe for extraction of said material, said packaging device (1) being formed by two substantially truncated baskets (3, 4) that are joined together, a lower basket (3) and an upper basket (4), said baskets comprising a base, a lateral wall and an upper surface defining an opening, **characterised in that** each of said baskets is constructed using an assembly of staves (31, 41) each extending over said base (35, 45) and said lateral wall (37, 47), **in that** said baskets (3, 4) are joined and secured together by the edges (36, 46) of their respective upper surfaces, once said flexible container (2) has been placed in one of the baskets (3, 4), in such a way as to present a general form of a barrel, and **in that** the lower basket (3) has an opening (34) or a corresponding pre-cut, allowing the passage of said outlet pipe.

2. Packaging device (1) according to claim 1, **characterised in that** it comprises a central circle (5) securing the two baskets (3, 4).

3. Packaging device (1) according to claim 2, **characterised in that** the securing of said two baskets (3, 4) and of said central circle (5) is performed by bonding.

4. Packaging device (1) according to any one of claims 1 to 3, **characterised in that** one of said staves (31) of said lower basket (3) has a pre-cut (341) forming said opening (34) .

5. Packaging device (1) according to claim 4, **characterised in that** said pre-cut stave (31) is made from paper, board or wood.

6. Packaging device (1) according to either of claims 4 or 5, **characterised in that** said stave (31) has a suitable form presenting a circular portion intended to coincide substantially with the base of the lower basket.

7. Packaging device (1) according to any one of claims 1 to 6, **characterised in that** at least some of said staves (31, 41), said at least one circle (32, 33, 42, 43) and said central circle (5) are made of wood.

8. Packaging device (1) according to claim 7, **characterised in that** said staves and said circles are produced from poplar veneer.

9. Packaging device (1) according to any one of claims 1 to 8, **characterised in that** it comprises a substantially cylindrical internal element, allowing the guidance and/or retention of said flexible container.

10. Packaging device (1) according to claim 9, **characterised in that** said substantially cylindrical element is formed by a sheet of card rolled into a cylinder.

11. Packaging device (1) according to any one of claims 1 to 10, **characterised in that** it comprises overwrapping means surrounding the assembly formed by the two baskets joined together.

12. Packaging device (1) according to claim 11, **characterised in that** said overwrapping means comprise a board element cut in such a way that its two ends join together and **in that** said assembly formed by the two baskets joined together cannot be separated from said overwrapping means without deterioration of the latter.

13. Packaging device (1) according to any one of claims 1 to 12, **characterised in that** it comprises a carrying handle.

14. Method for manufacturing a package (1) according to any one of claims 1 to 13, **characterised in that** it comprises the following steps:
- manufacture of two truncated baskets (3, 4), a lower basket (3) and an upper basket (4), comprising the substeps of:
o obtaining staves (31, 41);
o creating an assembly of such staves in a star;
o pressing said staves assembled in a star, to form a base and side wall of each of the baskets;
- pre-cutting or cutting an opening (34) in one of the staves of said lower basket (3);
- positioning of a flexible container (2) in said lower basket (3);
- positioning of said upper basket (4) on said lower basket (3), said upper surfaces being placed against each other;
- joining of said baskets (3, 4) by the edges (36, 46) of their respective upper surfaces.

15. Manufacturing method according to claim 14, **characterised in that** it consists of at least one of the steps belonging to the group comprising:
- providing a paper or board stave having an opening (34) or a corresponding pre-cut for the passage of an outlet pipe of said flexible container;
- inserting a substantially cylindrical internal element, intended to facilitate the guidance and/or retention of said flexible container;
- positioning, for example bonding of a central circle (5) to join together the two baskets (3, 4);
- positioning of overwrapping means surrounding the assembly formed by the two baskets joined together.
